# EUROPEAN PATENT APPLICATION

(11) **EP 1 524 651 A2**
(43) Date of publication of application: **20.04.2005**
(21) Application number: 04256370.0
(22) Date of filing: 15.10.2004
(51) Int. Cl.: G11B 7/00, G11B 15/00

(54) **Information-processing apparatus and information administration system using the same**

(30) Priority: 17.10.2003 JP 2003358108
(71) Applicant: SONY CORPORATION, Tokyo (JP)
(72) Inventor: Katsuta, Junji c/o Sony Corporation, Shinagawa-ku Tokyo (JP); Sasaki, Yasuo c/o Sony Corporation, Shinagawa-ku Tokyo (JP)
(74) Representative: Nicholls, Michael John

(57) **Abstract**

Information-processing apparatus acquires unique identification (unique ID) from MiniDisc (MD) medium having an individual-information-recording area. Network server administers characteristic information of each of the MD media. The information-processing apparatus then acquires from the network server the characteristic information corresponding to the MD medium that has been identified according to the unique ID. The information-processing apparatus optimizes its servo characteristic according to the characteristic information to record or reproduce the information.

## Description

This invention generally relates to an information-processing apparatus and an information administration system using the same. More particularly, it relates to an information-processing apparatus for recording or reproducing information on or from an recording medium that may be loaded or unloaded into or from the apparatus, an information administration system incorporating the information-processing apparatus, and an optical disc as the recording medium.

Conventional apparatus for recording or reproducing information on or from an optical disc has filed to perform identification administration on individual disc. This has prevented some controls such as optimization of servo operations due to characteristics of the disc to be set from being attained.

The conventional apparatus has had the following faults:
1. The apparatus has often adjusted the servo characteristics of optical disc to an average level in a specification thereon in order to allow the information to be recorded or reproduced on or from all the optical discs that have various kinds of characteristics. Thus, among the optical discs manufactured according to a set specification, the optical disc having a characteristic near an upper limit or a lower limit of the specification has less playability;
2.The necessity of constructing a servo system taking into consideration all the characteristics of the optical discs to be permitted in a format increases costs for development;
3.The necessity of constructing a servo system by hardware taking into consideration all the characteristics of the optical discs to be permitted in a format increases the number of parts, also thereby increasing costs for goods;
4.The increase in the number of parts causes difficulty in making the apparatus light and small sized;
5.The necessity of constructing a servo system taking into consideration all the characteristics of the optical discs to be permitted in a format causes time for adjustment in manufacture thereof to elongate, thereby increasing costs for manufacture;
6.Power consumption for recording or reproducing information on or from the disc has been set based on an average level in the specification of disc. Among the discs, the optical disc having a characteristic near an upper limit or a lower limit of the specification has more lost in power than the disc having the average level has. Thereby the power consumption increases when recording or reproducing the information on or from the optical disc having a characteristic near an upper limit or a lower limit of the specification; and
7. According to average temperature characteristics of optical discs, operable temperature coverage of the information-processing apparatus has been limited.

This invention solves the above faults and has an object to provide an information-processing apparatus for recording or reproducing information according to characteristics of recording media, an information administration system incorporating the information-processing apparatus, and an optical disc as the recording medium.

According to the present invention, the foregoing object is attained by an information-processing apparatus for performing at least one of record of information on an recording medium having an individual-information-recording area for recording individual information of the recording medium and reproduction of the information from the recording medium, which is loaded into the apparatus and unloaded therefrom. This apparatus comprises information-acquiring device for acquiring the individual information for the recording medium from the individual-information-recording area of the recording medium. The individual-information-recording area has recorded the individual information. The apparatus also comprises controller for allowing for recording or reproducing the information due to characteristic of the recording medium by using the individual information acquired by the information-acquiring device.

In the information-processing apparatus of the invention, when recording or reproducing the information on or from the recording medium, the information-acquiring device acquires the individual information for the recording medium from an individual-information-recording area of the recording medium. The controller performs controls due to characteristic of the recording medium by using the individual information acquired by the information-acquiring device to record or reproduce the information.

In accordance with another aspect of the invention, an information administration system involves at least one of information-processing apparatuses each for performing at least one of record of information on an recording medium having an individual-information-recording area for recording at least identification information for identifying the recording medium and reproduction of the information from the recording medium, which is loaded into the apparatus and unloaded therefrom, and an administrative equipment for connecting with at least one of the information-processing apparatuses through a network. Any one of the information-processing apparatuses comprises information-acquiring device for acquiring the identification information for the recording medium from the individual-information-recording area of the recording medium. The information-processing apparatus also comprises communication device for communicating to the administrative equipment the identification information acquired by the acquiring device. The information-processing apparatus further comprises controller for allowing for recording or reproducing the information due to characteristic of the recording medium based on characteristic information received from the administrative equipment. Further, the administrative equipment comprises storing part for storing the characteristic information of the recording medium having the individual-information-recording area. The administrative equipment also comprises administrating device for acquiring from the storing part the characteristic information corresponding to the recording medium identified according to the identification information comnunicated from the information-processing apparatus and communicating the characteristic information thus acquired to the information-processing apparatus corresponding thereto.

In the information administration system of the invention, when the information-processing apparatus records or reproduces the information on or from the recording medium, the information-acquiring device acquires identification information for the recording medium from the individual-information-recording area of the recording medium. The communication device communicates to the administrative equipment the identification information acquired by the acquiring device.

The administrative equipment acquires from the characteristic information stored on the storing part the characteristic information corresponding to the recording medium identified due to the identification information communicated by the information-processing apparatus and communicates it to the corresponding information-processing apparatus. In the information-processing apparatus receiving it, the controller performs controls due to characteristic of the recording medium by using the characteristic information received from the administrative equipment to record or reproduce the information.

Since in the information-processing apparatus or the information administration system according to aspects of the invention, an optical disc records the identification information and/or the characteristic information, the information may be recorded or reproduced on or from the optical disc due to the characteristic of individual disc, thereby achieving proper effects as follows:
1.Improvement of the playability;
2.Reduction in loss on the controls, thereby reducing the power consumption;
3.Decrease in deviation of the power consumption for each disc;
4.Reduction in the numbers of parts to holding the costs for parts and development down because of no necessity of design for being adaptable to all the discs as the hardware;
5. Realization of the light and small sized apparatus because of the decrease in the number of parts;
6.Reduction in the manufacturing time of the disc and the cost for manufacture for disc accompanying with no requirement for adjustment in shipment of the disc because of optimization for each disc in the record/reproduction of the information; and
7.Enlargement of operable temperature coverage of the information-processing apparatus because of optimization for the operation by software over the temperature characteristics of the discs.

The concluding portion of this specification particularly points out and directly claims the subject matter of the present invention. However those skill in the art will best understand both the organization and method of operation of the invention, together with further advantages and objects thereof, by reading the remaining portions of the specification in view of the accompanying drawing(s) wherein like reference characters refer to like elements.

Embodiments of the invention will now be described, by way of example only, with reference to the accompanying drawings in which:
FIG. 1 is a block diagram for showing a configuration of an embodiment of an information-processing apparatus according to the invention;
FIG. 2 is a conceptual diagram for showing a configuration of a MiniDisc (trademark) medium having individual information;
FIG. 3 is a conceptual diagram for showing an arrangement of a general photo-detector;
FIG. 4 is a block diagram for showing a configuration of an embodiment of an information administration system according to the invention;
FIG. 5 is a flowchart for showing operation (in a manufacture process of the MiniDisc medium) of the information administration system;
FIG. 6 is a flowchart for showing operation (in a record/reproduction process of information) of the information administration system;
FIG. 7 is a flowchart for showing operation (in another record/reproduction of information) of the information administration system; and
FIG. 8 is a flowchart for showing operation (in further record/reproduction process of information) of the information administration system.

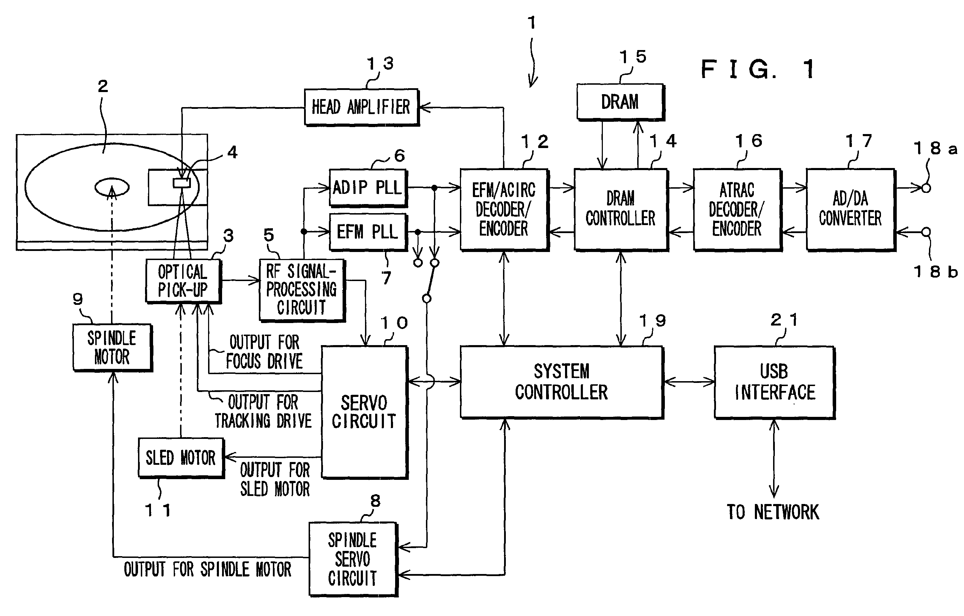

The following will describe preferred embodiments of information-processing apparatus, information administration system, and optical disc according to the invention with reference to the accompanying drawings. FIG. 1 shows a configuration of an embodiment of the information-processing apparatus according to the invention. The information-processing apparatus 1 performs record or reproduction of audio and video or the like using MiniDisc (MD) medium, which is a kind of optical disc, as recording medium. As the apparatus 1 are illustrated stationary audio equipment, stationary game equipment, stationary-recording equipment, portable audio equipment and the like. The MD medium 2 is loaded or unloaded to or from the apparatus 1. The apparatus 1 processes MD medium 2 including a conventional MD medium and an MD medium having an individual-information-recording area for recording individual information such as identification information for identifying individual disc medium and characteristic information of the disc medium.

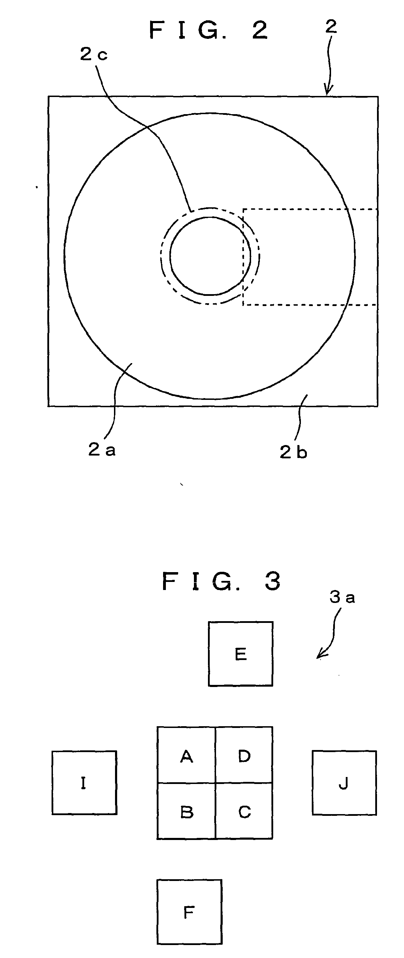

FIG. 2 shows a configuration of such the MD medium 2 having the individual-information-recording area for recording the individual information. The MD medium 2 has a cartridge 2b containing an optical disc 2a. The optical disc 2a has such the individual-information-recording area 2c for recording the individual information of the optical disc 2a on the innermost circumference in an information area of the optical disc 2a. Information is stored in the individual-information-recording area 2c with a non-rewritable method. As the individual information, the identification information such as unique identification code (unique ID), a lot number, year, month and day of the manufacture, which are used for identifying the disc, and the characteristic information when manufacturing it are stored in the manufacture thereof. To the unique ID, unique identification code to each disc is assigned, thereby identifying individual MD medium 2. The characteristic information includes characteristics in disc formation, optical characteristics, film characteristics, record/reproduction characteristics, temperature characteristics, optimal power characteristic. Note that depending on relationship between a recordable amount of information that is possible of being recorded in the individual-information-recording area 2c and an amount of characteristic information, some of the indicative characteristic information may be selected to be recorded therein. Such the individual information is read into the information-processing apparatus 1 shown in FIG. 1 and is used therein. On outside from the individual-information-recording area 2c on the disc 2, lead-in-area and the like are provided as the conventional MD.

Referring back to FIG. 1, the information-processing apparatus 1 has an optical pick-up 3 and a magnetic head 4. The optical pick-up 3 and the magnetic head 4 are oppositely arranged so that the MD medium 2 is sandwiched between them. The optical pick-up 3 has such a configuration as the well-known one, for example. A beam irradiated from laser diode constituting irradiation device is divided into one main beam and two sub-beams by a diffraction grating to irradiate them to the MD medium 2. Wollaston prism divides each beam reflected by the MD medium 2 into three parts, so that nine beams occur. Photo-detectors constituting light receiver receive them.

FIG. 3 shows an arrangement of general photo-detectors. The photo-detectors 3a are constructed of a four-divided photo-detector wherein the divided photo-detectors are shown as A to D, and four photo-detectors E to J that are arranged around the four-divided photo-detector. Output from the photo-detectors A to D is used for focus servo. Outputs from the photo-detector E and F are used for tracking servo. Outputs from the photo-detectors I and J are used for detection of signal from the MD medium 2.

Referring back to FIG. 1, RF signal-processing circuit 5 receives output from the optical pick-up 3. The RF signal-processing circuit 5 fetches from the output of the optical pick-up 3 an RF signal, a light amount signal (A, B, C, D), a focus error signal (FE), a tracking error signal (TE), an Address-In-Pregroove (ADIP) signal, and the like. Note that in the MD medium 2, a groove wobbles so that an address can be formed, which is referred to as "Address-in-Pregroove (ADIP)". The ADIP signal is used for address when accessing. It is also used for performing a constant linear velocity (CLV) control in a spindle motor, which will be described later.

Based on the ADIP signal output from the RF signal-processing circuit 5, ADIP phase locked loop (PLL) circuit 6 generates a clock. Based on the RF signal output from the RF signal-processing circuit 5, eight to fourteen modulation phase locked loop (EFM PLL) circuit 7 generates a clock. Outputs from the ADIP PLL 6 and EFM PLL 7 are selected according to a kind of the MD medium 2 so that the selected one is transferred to a spindle servo circuit 8. The spindle servo circuit 8 performs CLV controls on a spindle motor 9 that drives rotation of the MD medium 2 using a clock of the ADI signal or a clock of the EF-Modulated RF signal according to a kind of the MD medium 2.

Servo circuit 10 receives the servo signals such as the focus error signal and the like that are output from the RF signal-processing circuit 5. The servo circuit 10 constituting servo-driver drives focus-driving mechanism of the optical pick-up 3, which is not shown, using the focus error signal to focus the beams on the MD medium 2. The servo circuit 10 also drives tracking-driving mechanism of the optical pick-up 3, which is not shown, using the tracking error signal to allow the beams to follow a track on the MD medium 2. The servo circuit 10 further drives sled motor 11 to move the optical pick-up 3 along a radial direction of the MD medium 2. It additionally adjusts output of the laser diode, which is not shown.

EFM/ACIRC decoder/encoder 12 performs EFM decode, advanced cross interleave Read Solomon code (ACIRC) decode, ADIP decode and the like when reproducing the information recorded on the MD medium 2. It also performs EFM encode, ACIRC encode, and the like when recording the information on the MD medium 2. Note that the advanced cross interleave Read Solomon code (ACIRC) is an error correction code used for the MD medium. When recording the information, a head amplifier 13 receives a signal generated by the EFM/ACIRC decoder/encoder 12 to drive the magnetic head 4 by which the information is written on the MD medium 2.

DRAM controller 14 controls writing a signal read from the MD medium 2 or reading a signal to be written in the MD medium 2 in or from a dynamic random access memory (DRAM) 15.

An adaptive transform acoustic coding (ATRAC) decoder/encoder 16 decodes a signal transferred from the EFM/ACIRC decoder/encoder 12 through the DRAM controller 14 when reproducing the information. It also encodes a signal to be transferred to the EFM/ACIRC decoder/encoder 12 through the DRAM controller 14 when recording the information. Note that the adaptive transform acoustic coding (ATRAC) is a compressing system used for the MD medium 2.

When reproducing the information, an AD/DA converter 17 converts a digital signal transferred from the ATRAC decoder/encoder 16 to an analog signal that is output through an output terminal 18a. When recording the information, it also converts an analog signal input through an input terminal 18b to a digital signal that is output to the ATRAC decoder/encoder 16.

System controller 19 includes a microcomputer for controlling the information-processing apparatus 1 based on operations of user, and functions as an information-acquiring device and a controller in this embodiment. The system controller 19 is connected with the servo circuit 10, the EFM/ACIRC decoder/encoder 12, and the DRAM controller 14. When the MD medium 2 is loaded, the system controller 19 reads individual information out of the MD medium 2 and writes it on DRAM 15 through the DRAM controller 14. The system controller 19 adjusts beam output of the optical pick-up 3 and servo characteristic so as to make them optimal for the corresponding MD medium 2 according to the individual information acquired from this MD medium 2. In this case, when the MD medium 2 has recorded identification information and characteristic information as the individual information, the system controller 19 adjusts the servo characteristic and the like using the characteristic information acquired from the MD medium 2. On the other hand, in a case where characteristic information is acquired from outside, which will be described later, the system controller 19 acquires from outside the characteristic information identified by the identification information acquired from the MD medium 2. It then adjusts the servo characteristic and the like using the characteristic information.

DRAM 15 temporarily stores information reproduced from the MD medium 2 or to be recorded on the MD medium 2 in order to constitute a skip-free technology. In this embodiment, the DRAM 15 also functions as storage device for the individual information. It is possible to provide therein a non-volatile memory as storage device in order to store the individual information. If the DRAM 15 is shared therewith, the cost may be reduced.

The information-processing apparatus 1 has a configuration such that it may be used solely or with it being connected with outside equipment(s). For example, according to a configuration such that the information-processing apparatus 1 is connected with a network through a personal computer (PC) 20, the information-processing apparatus 1 includes a universal serial bus (USB) interface 21, which constitutes communication device together with the system controller 19.

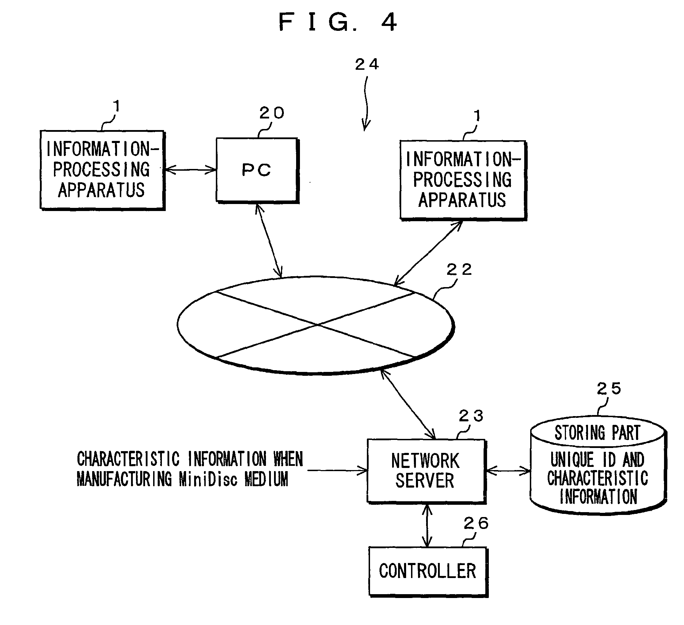

The following will describe an information administration system incorporating such the information-processing apparatus 1. FIG. 4 shows a configuration of an embodiment of the information administration system according to the invention. The PC 20 is connected with a network 22 such as the Internet so that the information-processing apparatus 1 can be connected with the network 22 through the PC 20. The network 22 is connected with a network server 23. The information-processing apparatus 1 downloads music or the like from the network server 23.

In the information administration system 24 of this embodiment, the network server 23 also functions as administrative equipment. The network server 23 has a storing part 25, which stores characteristic information of the MD medium 2 when manufacturing it. The characteristic information is acquired from the manufacturer thereof and the like. An controller 26 constituting the administrating device acquires the characteristic information from the storing part 25 based on a request from the information-processing apparatus 1 connected therewith through the network 22 and sends it to the information-processing apparatus 1. Thus, the information-processing apparatus 1 acquires from the network server 23 the characteristic information corresponding to the MD medium 2 to be used.

Although the information-processing apparatus 1 has been described as one having a configuration such that it has USB interface 21 and is connected with the network 22 through the personal computer 20, this invention is not limited to this. In this invention, the information-processing apparatus 1 may have an interface for connecting directly to the network 22. Further, the personal computer 20 may incorporate the information-processing apparatus 1, which is not shown.

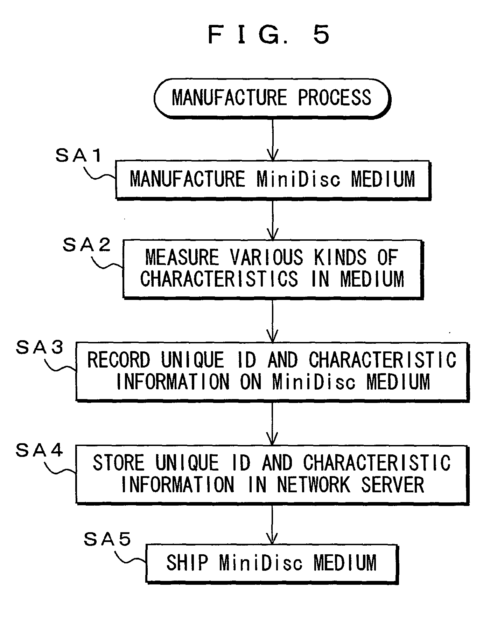

FIGS. 5-8 are flowcharts each for showing operation of the information administration system. The following will describe operations of the information-processing apparatus 1 and the information administration system 24.

First, the following will describe a manufacture process of the MD medium 2 using FIG. 5.

A manufacturer of the MD medium 2 manufactures it at step SA1 and measures various kinds of characteristics in the MD medium 2 at step SA2. Note that characteristics in each of the media are similar in the media manufactured in the same lot and thus, this lead to measurement of the characteristics in the medium in a lot unit, for example. The measured characteristic information and the identification information such as unique ID, which is a unique code for each MD medium, are recorded on the individual-information-recording area 2c shown in FIG. 2 at step SA3.

At step SA4, they are also stored in the storing part 25 of the network server 23 in order to allow the characteristic information to be searched using the unique ID. The MD medium 2 thus manufactured is shipped as a product at step SA5.

Second, the following will describe record/reproduction operations of the MD medium 2.

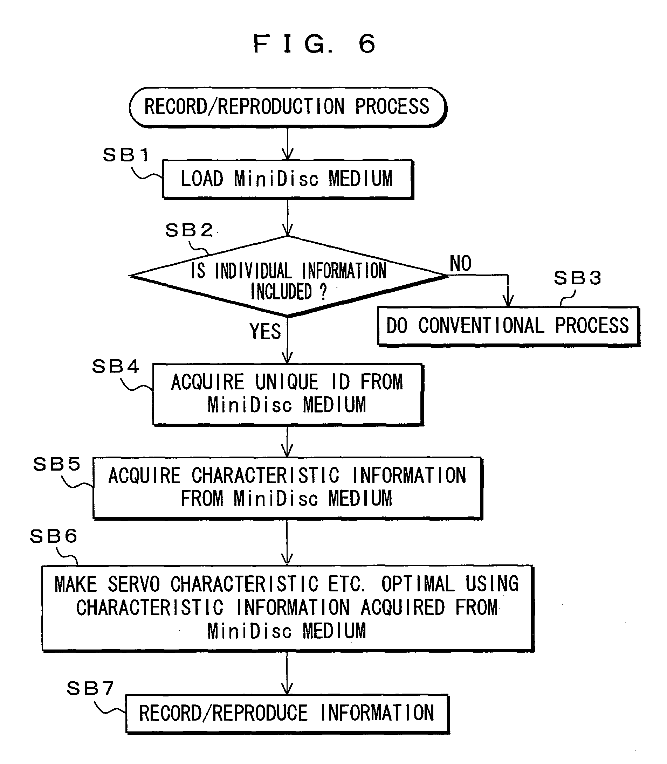

FIG. 6 illustrates a first embodiment of the record/reproduction operations by which the characteristic information is acquired from the MD medium 2.

When the MD medium 2 is loaded into the information-processing apparatus 1 at step SB1, the system controller 19 controls the spindle servo circuit 8, the servo circuit 10, and the like to read information out of the innermost circumference of MD medium 2 at step SB2, thereby determining whether the information thus read includes information from the individual-information-recording area 2c.

If, at step SB2, determining that the MD medium 2 thus loaded has no individual-information-recording area 2c, table of contents (TOC) is read and the record or reproduction of information is performed according to the conventional process at step SB3.

If, at step SB2, determining that the MD medium 2 thus loaded has the recording area 2c, the system controller 19 has the unique ID and the characteristic information read from the MD medium 2 and controls the DRAM controller 14 to store them on the DRAM 15 at steps SB4 and SB5. Thereby, the unique ID and the characteristic information are acquired from the MD medium 2.

The system controller 19 has beam output and servo characteristic adjust using the characteristic information acquired from the MD medium 2 to record or reproduce the information on or from the MD medium 2 at steps SB6 and SB7.

Thus, the system controller 19 has optical characteristic, for example, of the MD medium 2 identify using the characteristic information acquired from the MD medium 2. The system controller 19 performs a control for recording the information by reducing the beam output when reflection coefficient of the MD medium 2 is high, for example. When identifying characteristic on manufacture of the MD medium 2, the system controller 19 performs a control for adjusting tracking and/or focus servo characteristics with them being adaptable to the medium. Further, when identifying temperature characteristic of the MD medium 2, the system controller 19 performs a control for continuing operations without any error occurring even if temperature in the information-processing apparatus 1 is temporarily risen.

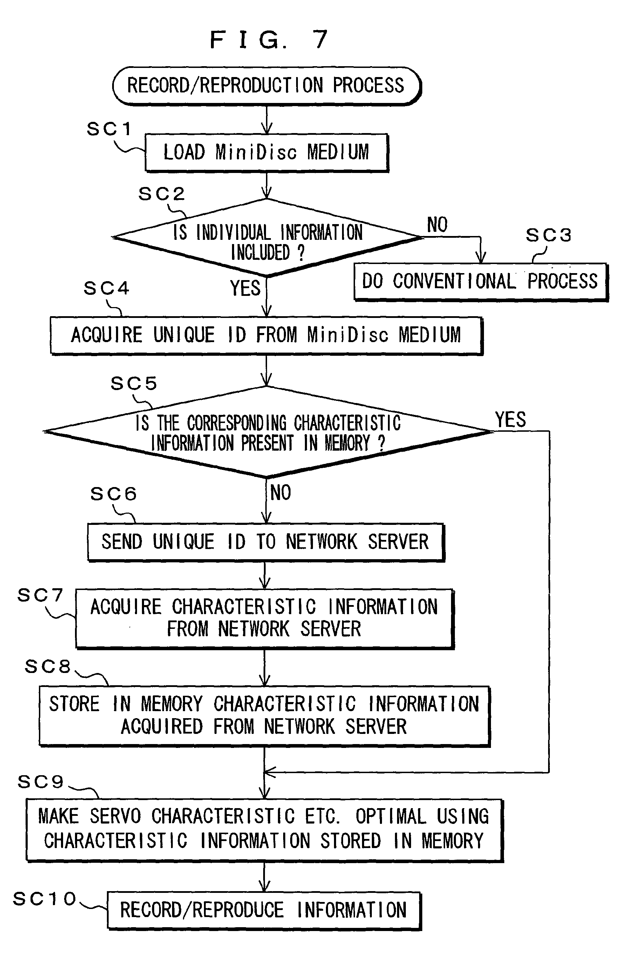

FIG. 7 illustrates a second embodiment of the record/reproduction operations by which the characteristic information is acquired from the network server 23.

When the MD medium 2 is loaded into the information-processing apparatus 1 at step SC1, the system controller 19 controls the spindle servo circuit 8, the servo circuit 10, and the like to read information out of the innermost circumference of MD medium 2 at step SC2, thereby determining whether the information thus read includes information from the individual-information-recording area 2c.

If, at step SC2, determining that the MD medium 2 thus loaded has no recording area 2c, TOC is read and the record or reproduction of information is performed according to the conventional process at step SC3.

If, at step SC2, determining that the MD medium 2 thus loaded has the recording area 2c, the system controller 19 has the unique ID read from the MD medium 2 and controls the DRAM controller 14 to store it on the DRAM 15 at step SC4. Thereby, the unique ID is acquired from the MD medium 2.

At step SC5, the system controller 19 has it search whether the DRAM 15 has stored the characteristic information identified by the unique ID acquired from the MD medium 2. If, at step SC5, the DRAM 15 stores no corresponding characteristic information, the system controller 19 sends the unique ID acquired from the MD medium 2 to the network server 23 through the USB interface 21 and the personal computer 20 at step SC6. The network server 23 acquires from the storing part 25 the characteristic information corresponding to the MD medium 2 identified by the unique ID received from the information-processing apparatus 1 and transfers it to the information-processing apparatus 1. The system controller 19 then acquires the characteristic information from the network server 23 and has the characteristic information store in the DRAM 15 at steps SC7 and SC8.

The system controller 19 has beam output and servo characteristic adjust using the characteristic information acquired from the network server 23, and the information record or reproduce on or from the MD medium 2 at steps SC9 and SC10.

If the characteristic information stored in the DRAM 15 is hold, not deleted, the characteristic information may be used even if the information-processing apparatus 1 is used in a local condition where it is not connected with the network 22. Namely, if, at step SC5, it is searched whether the DRAM 15 has stored the characteristic information identified by the unique ID acquired from the MD medium 2 so that the DRAM 15 stores the corresponding characteristic information, the system controller 19 has the beam output and servo characteristic adjust using the characteristic information stored in the DRAM 15 to record or reproduce the information on or from the MD medium 2 at steps SC9 and SC10.

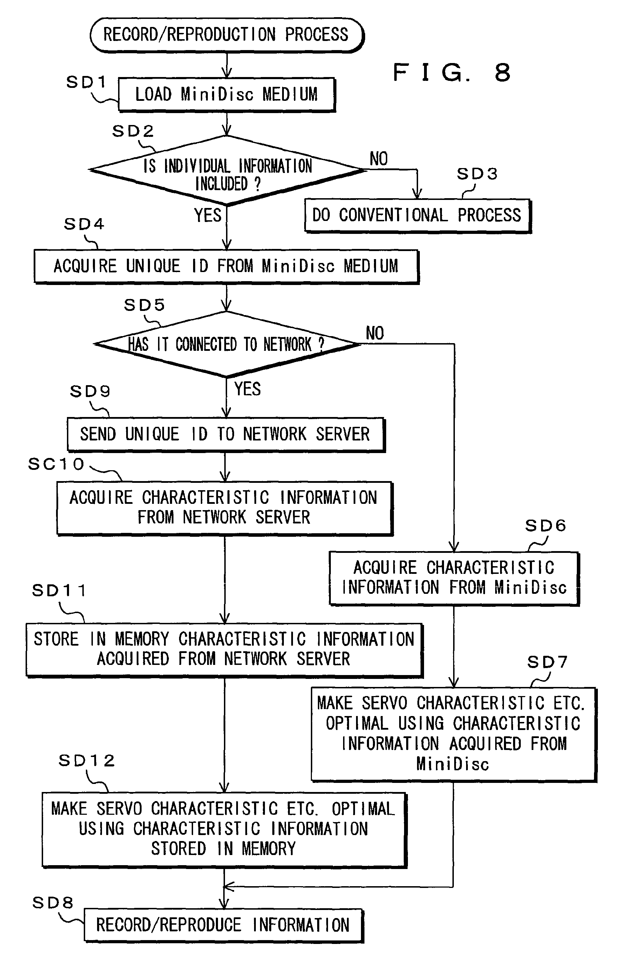

FIG. 8 illustrates a third embodiment of the record/reproduction operations by which the characteristic information is acquired selectively from the MD medium 2 or the network server 23.

When the MD medium 2 is loaded into the information-processing apparatus 1 at step SD1, the system controller 19 controls the spindle servo circuit 8, the servo circuit 10, and the like to read information out of the innermost circumference of MD medium 2 at step SD2, thereby determining whether the information thus read includes information from the individual-information-recording area 2c.

If, at step SD2, determining that the MD medium 2 thus loaded has no recording area 2c, TOG is read and the record or reproduction of information is performed according to the conventional process at step SD3.

If, at step SD2, determining that the MD medium 2 thus loaded has the recording area 2c, the system controller 19 has the unique ID read from the MD medium 2 and controls the DRAM controller 14 to store it on the DRAM 15 at step SD4. Thereby, the unique ID is acquired from the MD medium 2.

If, at step SD5, the information-processing apparatus 1 is not connected with the network server 23, the system controller 19 has the characteristic information acquire from the MD medium 2 at step SD6. The system controller 19 has beam output and servo characteristic adjust using the characteristic information acquired from the network server 23, and the information record or reproduce on or from the MD medium 2 at steps SD7 and SD8.

If, at step SD5, the information-processing apparatus 1 is connected with the network server 23, the system controller 19 has the unique ID store in the DRAM 15 send to the network server 23 at step SD9. The network server 23 acquires from the storing part 25 the characteristic information corresponding to the MD medium 2 identified by the unique ID received from the information-processing apparatus 1 and transfers it to the information-processing apparatus 1. The system controller 19 then acquires the characteristic information from the network server 23 and has the characteristic information store in the DRAM 15 at steps SD10 and SD11.

Then, the system controller 19 has the beam output and servo characteristic adjust using the characteristic information acquired from the network server 23 to record or reproduce the information on or from the MD medium 2 at steps SD12 and SD8.

In the above third embodiment, the MD medium 2 records minimum characteristic information, for example, and if the information-processing apparatus 1 is used in a local situation, it has attempt to make servo operation optimum using the characteristic information recorded in the MD medium 2. If the information-processing apparatus 1 is used in a situation such that the apparatus 1 is connected with the network 22, it has attempt to make servo operation optimum using the characteristic information recorded in the network server 23. Since individual medium is identified from each other based on the unique ID recorded in the MD medium 2, the characteristic information corresponding to this MD medium 2 on or from which the information is recorded or reproduced may be acquired from the network server. The network server 23 may store a large amount of data. This allows the servo operation to be made optimum using a larger amount of information.

Further, in the second and third embodiments, the characteristic information for identifying MD medium 2 has been searched using the unique ID. Since similar characteristics of the MD media 2 occur in each lot thereof when manufacturing them, the network server 23 stores characteristic information for each lot and a lot number when manufacturing each of the MD media 2 is recorded in the individual-information-recording area 2c of the MD medium 2. When recording or reproducing the information on or from the MD medium 2, the information-processing apparatus 1 acquires the characteristic information of the MD medium 2 for each lot from the network server 23 by downloads, and makes the servo characteristic optimum using the characteristic information thus acquired. Thus, making the servo characteristic optimum using the characteristic information for each lot allows various characteristics of the MD medium 2 to be improved.

Thus has been described the information-processing apparatus, the information administration system, and the optical disc according to the invention using the optical disc as recording medium. This invention, however, is not limited to this. This invention is applicable to another recording medium such as magnetic device. While the foregoing specification has described preferred embodiment(s) of the present invention, one skilled in the art may make many modifications to the preferred embodiment without departing from the invention in its broader aspects. The appended claims therefore are intended to cover all such modifications as fall within the true scope and spirit of the invention.

## Claims

1. An information-processing apparatus for performing at least one of recording of information on a recording medium having an individual-information-recording area for recording individual information of the recording medium and reproduction of the information from the recording medium, said recording medium being loaded into the apparatus and unloaded therefrom, the apparatus comprising:
an information-acquiring device for acquiring the individual information for said recording medium from the individual-information-recording area of said recording medium, said area recording the individual information; and
a controller for allowing for performing any one of the record and the reproduction of the information due to characteristic of said recording medium by using the individual information acquired by the information-acquiring device.

2. The information-processing apparatus according to Claim 1, wherein said individual information includes identification information for identifying said recording medium.

3. The information-processing apparatus according to Claim 1, wherein said individual information includes identification information for identifying said recording medium and characteristic information for indicating characteristic of said recording medium; and
wherein said controller allows for performing any one of the recording and the reproduction of the information due to the characteristic of said recording medium by using the characteristic information acquired from the recording medium.

4. The information-processing apparatus according to Claim 3 further comprising a communication device for communicating the identification information to outside.

5. The information-processing apparatus according to Claim 3, wherein the characteristic information is acquired from outside, said characteristic information corresponding to the recording medium identified according to the identification information for identifying said recording medium.

6. The information-processing apparatus according to Claim 3 further comprising storage device for storing said characteristic information acquired from outside, said characteristic information corresponding to the recording medium identified according to the identification information acquired from said recording medium.

7. The information-processing apparatus according to Claim 6, wherein said controller allows for acquiring the characteristic information from said storage device, said characteristic information indicating characteristic of the recording medium identified according to the identification information for identifying said recording medium, and for performing any one of the record and the reproduction of the information due to the characteristic of said recording medium.

8. The information-processing apparatus according to any one of the preceding claims, wherein said recording medium comprises an optical disc.

9. The information-processing apparatus according to any one of the preceding claims, further comprising:
an optical disc;
an optical pick-up having an beam-irradiating device for irradiating beam onto said optical disc and a light-receiving device for receiving reflection light of said beam; and
servo-driving device for driving said optical pick-up based on output from said light-receiving device,
wherein said controller controls said servo-driving device according to the characteristic of said recording medium.

10. An information administration system involving at least one information-processing apparatuses each for performing at least one of recording of information on a recording medium having an individual-information-recording area for recording at least identification information for identifying the recording medium and reproduction of the information from the recording medium, said recording medium being loaded into the apparatus and unloaded therefrom, and administrative equipment for connecting with at least one of said information-processing apparatuses through a network,
wherein any one of said information-processing apparatuses comprises:
information-acquiring device for acquiring the identification information for the recording medium from the individual-information-recording area of the recording medium;
communication device for communicating to said administrative equipment the identification information acquired by said acquiring device; and
controller for allowing for performing any one of the record and the reproduction of the information due to characteristic of said recording medium based on characteristic information for indicating characteristic of said recording medium, said characteristic information being received from said administrative equipment, and
wherein said administrative equipment comprises:
storing part for storing the characteristic information of said recording medium having the individual-information-recording area; and
administrating device for acquiring from said storing part the characteristic information corresponding to the recording medium identified according to the identification information communicated from said information-processing apparatus and communicating the characteristic information thus acquired to the information-processing apparatus corresponding thereto.

11. The information administration system according to Claim 10, wherein said information-processing apparatus further comprises storage device for storing said characteristic information.

12. The information administration system according to Claim 10, wherein the characteristic information acquired from said administrative equipment is stored, said administrative equipment comprising storing part for storing the characteristic information of said recording medium having the individual-information-recording area and administrating device for acquiring from said storing part the characteristic information corresponding to the recording medium identified according to the identification information communicated from said information-processing apparatus and communicating the characteristic information thus acquired to the information-processing apparatus corresponding thereto.

13. The information administration system according to Claim 10, wherein the information-acquiring device for acquiring said identification information for identifying said recording medium from the recording medium having an individual-information-recording area, said area recording at least the identification information, the communication device for communicating to said administrative equipment the identification information acquired by said acquiring device, and the controller for allowing for performing any one of the record and the reproduction of the information due to characteristic of said recording medium based on the characteristic information received from said administrative equipment acquire from said storing part the characteristic information identified due to the identification information acquired by the said acquiring device.

14. The information administration system according to Claim 10, wherein the characteristic information of said recording medium is stored in the individual-information-recording area, and
wherein said controller uses the characteristic information selected from the characteristic information acquired from the recording medium by said acquiring device and the characteristic information acquired by said administrative equipment.

15. The information administration system according to any one of Claims 10 to 14, wherein said recording medium comprises an optical disc.

16. The information administration system according to any one of Claims 10 to 14, wherein said information-processing apparatus comprises:
an optical disc;
an optical pick-up proving with an beam-irradiating device for irradiating beam onto said optical disc and a light-receiving device for receiving reflection light of said beam; and
servo-driving device for driving said optical pick-up based on output from said light-receiving device,
wherein said controller controls said servo-driving device according to the characteristic of said recording medium.

17. Optical disc including an individual-information-recording area for storing individual information for the disc, said individual information including identification information formed by unique identification code and characteristic information for indicating characteristic of the disc when manufacturing the disc.

18. The optical disc according to Claim 17, wherein the information is stored in said individual-information-recording area with a non-rewritable method.

19. The optical disc according to Claim 17 or 18, wherein said characteristic information includes information for identifying at least an optical characteristic of the disc.

20. The optical disc according to Claim 17, 18 or 19, wherein said characteristic information includes information for identifying formative characteristic of the disc and information for identifying at least an optical characteristic of the disc.

21. The optical disc according to Claim 17, 18, 19 or 20, wherein said characteristic information includes information for identifying temperature characteristic and information for identifying at least an optical characteristic of the disc.
